# EUROPEAN PATENT APPLICATION

(11) **EP 4 510 253 A2**
(43) Date of publication of application: **19.02.2025**
(21) Application number: 24188858.5
(22) Date of filing: 16.07.2024
(51) Int. Cl.: H01M 8/04111, H01M 8/04119, H01M 8/10

(54) **FUEL CELL SYSTEM AND METHOD OF OPERATING SAME**

(30) Priority: 07.08.2023 JP 2023128820
(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa (JP)
(72) Inventor: KUZE, Tatsuya, Kawasaki-shi, Kanagawa 105-0023 (JP); TAKAMATA, Hikaru, Shinagawa, Tokyo 105-0023 (JP)
(74) Representative: Hoffmann Eitle

(57) **Abstract**

According to one embodiment, a fuel cell system supplies high-pressure oxygen to a fuel cell by a compressor unit in which a compressor and a turbine are interlocked. An oxygen-containing gas flowing out from an oxygen-containing gas flow path flows into a cooling water tank and then is discharged. Cooling water is supplied from the cooling water tank to a cooling water flow path in the fuel cell.

## Description

### FIELD

Embodiments of the present invention relate to a fuel cell system and a method of operating the same.

### BACKGROUND

A polymer electrolyte fuel cell as an example of a fuel cell generally includes multiple unit cells each including a membrane electrode assembly that includes an electrolyte membrane and two electrodes sandwiching the electrolyte membrane and two separators sandwiching the membrane electrode assembly. A stack of the multiple unit cells is generally referred to as a cell stack.

One of the above two electrodes may be referred to as an anode electrode and the other as a cathode electrode. The anode electrode is supplied with a fuel gas containing hydrogen to generate an electrochemical reaction. The cathode electrode generates an electrochemical reaction by being supplied with an oxygen-containing gas containing oxygen.

In the polymer electrolyte fuel cell, a flow path for circulating a fuel gas may be provided in one of the above two separators, and a flow path for circulating an oxygen-containing gas may be provided in the other of the two separators. The separator having the flow path of the fuel gas may be referred to as an anode electrode separator, and the separator having the flow path of the oxygen-containing gas may be referred to as a cathode electrode separator. Such separators may be formed of a porous body.

In addition, one of the anode electrode separator and the cathode electrode separator described above may be provided with a flow path of cooling water for removing reaction heat generated by an electrochemical reaction. In this case, a flow path of a reaction gas (a hydrogen gas or an oxygen-containing gas) is generally provided on one surface of the separator, and the flow path of cooling water is provided on the opposite surface.

When a fuel cell system having a power generation output of, for example, 100 kW or more is configured using the polymer electrolyte fuel cell as described above, it is required to supply a large amount of oxygen to the cathode electrode. In this case, a compressed oxygen-containing gas may be supplied to the cathode electrode of each unit cell of the cell stack from a compressor with a turbine that can be driven at high power.

However, when a large amount of oxygen-containing gas is supplied from the compressor with the turbine as described above, the pressure of the oxygen-containing gas flowing through the flow path of the unit cell increases. Such an increase in the pressure of the oxygen-containing gas may affect the state of cooling water flowing through the separator when the separator is formed of the porous body as described above. For example, the water level of the cooling water in a tank that stores the cooling water may undesirably rise. In addition, the cooling water may flow into the flow path of the fuel gas due to the oxygen-containing gas, which prevents the fuel gas from flowing properly and may affect power generation.

### BRIEF DESCRIPTION OF DRAWINGS

[Fig. 1] Fig. 1 is a view schematically illustrating a fuel cell system according to a first embodiment.
[Fig. 2] Fig. 2 is a schematic cross-sectional view of a fuel cell in the fuel cell system illustrated in Fig. 1.
[Fig. 3] Fig. 3 is a flowchart illustrating an example of an operation of the fuel cell system illustrated in Fig. 1.
[Fig. 4] Fig. 4 is a view schematically illustrating a fuel cell system according to a second embodiment.

### DETAILED DESCRIPTION

A fuel cell system according to one embodiment includes: a fuel cell that is provided with a fuel gas flow path through which a fuel gas to be supplied to an anode electrode flows, an oxygen-containing gas flow path through which an oxygen-containing gas containing oxygen to be supplied to a cathode electrode flows, and a cooling water flow path through which cooling water flows, and in which at least the oxygen-containing gas flow path and the cooling water flow path are separated from each other by a conductive porous body; a cooling water tank that stores the cooling water; an upstream side cooling water flow pipe that connects an upstream end of the cooling water flow path and the cooling water tank and allows the cooling water to flow from the cooling water tank into the cooling water flow path; a downstream side cooling water flow pipe that connects a downstream end of the cooling water flow path and the cooling water tank and returns the cooling water that has flowed out of the cooling water flow path to the cooling water tank; an upstream side oxygen flow pipe that is connected to an upstream end of the oxygen-containing gas flow path and allows the oxygen-containing gas to flow into the oxygen-containing gas flow path; a downstream side first oxygen flow pipe that connects a downstream end of the oxygen-containing gas flow path and the cooling water tank; a downstream side second oxygen flow pipe that is connected to the cooling water tank and discharges the oxygen-containing gas that has flowed into the cooling water tank from the downstream side first oxygen flow pipe out of the cooling water tank; and a compressor unit that includes a compressor which is disposed inside the upstream side oxygen flow pipe and compresses and sends the oxygen-containing gas to a downstream side, a turbine which is disposed inside the downstream side second oxygen flow pipe and rotated by the oxygen-containing gas discharged from the cooling water tank, and a drive shaft which connects the compressor and the turbine, and drives the drive shaft by a motor.

A method of operating a fuel cell system according to one embodiment is a method of operating a fuel cell system including: a fuel cell that is provided with a fuel gas flow path through which a fuel gas to be supplied to an anode electrode flows, an oxygen-containing gas flow path through which an oxygen-containing gas containing oxygen to be supplied to a cathode electrode flows, and a cooling water flow path through which cooling water flows, and in which at least the oxygen-containing gas flow path and the cooling water flow path are separated from each other by a conductive porous body; a cooling water tank that stores the cooling water; an upstream side cooling water flow pipe that connects an upstream end of the cooling water flow path and the cooling water tank and allows the cooling water to flow from the cooling water tank into the cooling water flow path; a downstream side cooling water flow pipe that connects a downstream end of the cooling water flow path and the cooling water tank and returns the cooling water that has flowed out of the cooling water flow path, to the cooling water tank; an upstream side oxygen flow pipe that is connected to an upstream end of the oxygen-containing gas flow path and allows the oxygen-containing gas to flow into the oxygen-containing gas flow path; a downstream side first oxygen flow pipe that connects a downstream end of the oxygen-containing gas flow path and the cooling water tank; a downstream side second oxygen flow pipe that is connected to the cooling water tank and discharges the oxygen-containing gas that has flowed into the cooling water tank from the downstream side first oxygen flow pipe out of the cooling water tank; and a compressor unit that includes a compressor which is disposed inside the upstream side oxygen flow pipe and compresses and sends the oxygen-containing gas to a downstream side, a turbine which is disposed inside the downstream side second oxygen flow pipe and rotated by the oxygen-containing gas discharged from the cooling water tank, and a drive shaft which connects the compressor and the turbine, and drives the drive shaft by a motor. In this operation method, an operation is performed so that a pressure difference between an internal pressure of the fuel gas flow path and an internal pressure of the oxygen-containing gas flow path becomes a predetermined pressure value or less.

Hereinafter, embodiments will be described with reference to the accompanying drawings.

### <First Embodiment>

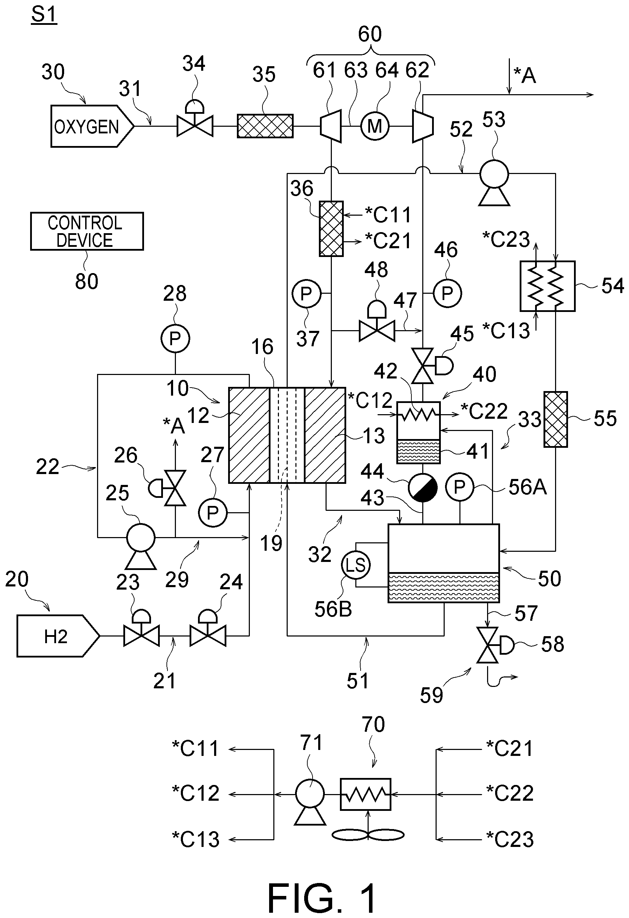

Fig. 1 schematically illustrates a fuel cell system S1 according to a first embodiment. As illustrated in Fig. 1, the fuel cell system S1 includes a fuel cell 10. The fuel cell 10 takes in a fuel gas containing hydrogen from a hydrogen supply source 20, and takes in an oxygen-containing gas containing oxygen from an oxygen supply source 30. In addition, the fuel cell 10 is supplied with cooling water from a cooling water tank 50. Multiple piping members (21, 22, 31 to 33, 51, and 52) through which a fluid (a fuel gas, an oxygen-containing gas, or cooling water) flows are connected to the fuel cell 10, the hydrogen supply source 20, the oxygen supply source 30, and the cooling water tank 50.

A compressor unit 60 compresses an oxygen-containing gas from the oxygen supply source 30 and supplies the gas to the fuel cell 10. As a result, the amount of oxygen to be supplied to the fuel cell 10 per unit time can be increased as compared with the case of not compressing the oxygen-containing gas, which can increase a power generation output. A radiator 70 is provided to cool the oxygen-containing gas and cooling water. A control device 80 controls a pressure, a flow rate, and the like of a fluid (a fuel gas, an oxygen-containing gas, and cooling water) flowing in the fuel cell system S1.

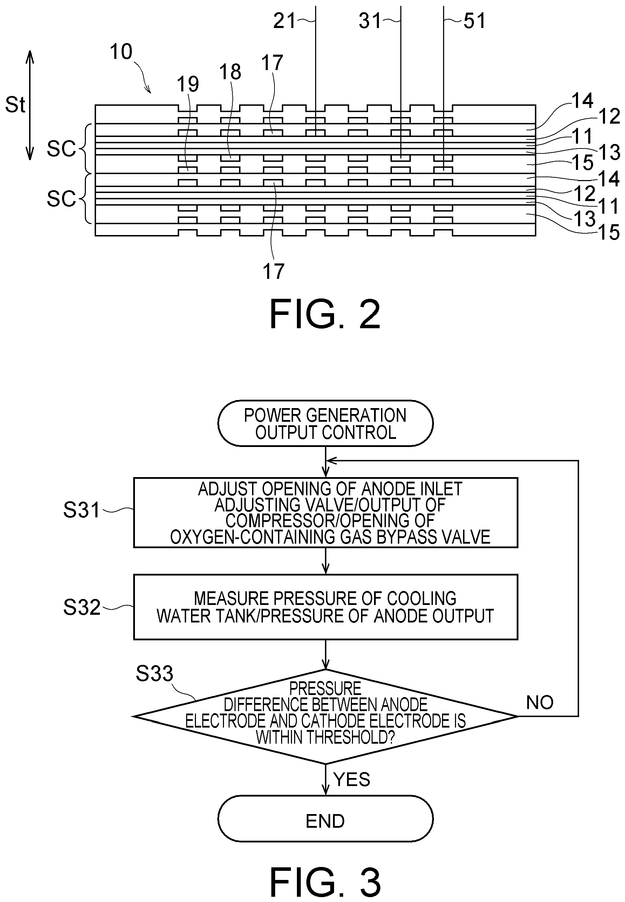

Fig. 2 is a schematic cross-sectional view of the fuel cell 10. As illustrated in Fig. 2, the fuel cell 10 has a cell stack in which multiple unit cells SC are stacked. Each unit cell SC includes: a diaphragm 11; an anode electrode 12; a cathode electrode 13; an anode electrode separator 14; and a cathode electrode separator 15.

The fuel cell 10 is a polymer electrolyte fuel cell in the present embodiment. Therefore, the diaphragm 11 is a polymer electrolyte membrane (ion exchange membrane) having ion conductivity. The anode electrode 12 is disposed so as to be in contact with one surface of the diaphragm 11, and the cathode electrode 13 is disposed so as to be in contact with the other surface of the diaphragm 11. Hereinafter, a stack of the diaphragm 11, the anode electrode 12, and the cathode electrode 13 is sometimes referred to as a membrane electrode assembly.

The anode electrode 12 is supplied with a fuel gas containing hydrogen from the hydrogen supply source 20. The cathode electrode 13 is supplied with an oxygen-containing gas containing oxygen from the oxygen supply source 30. The fuel cell 10 generates power when the anode electrode 12 reacts with hydrogen and the cathode electrode 13 reacts with oxygen.

The anode electrode separator 14 and the cathode electrode separator 15 are arranged so as to sandwich the membrane electrode assembly (11, 12, 13). The anode electrode separator 14 is disposed so as to be in contact with the anode electrode 12, and the cathode electrode separator 15 is disposed so as to be in contact with the cathode electrode 13. In the present embodiment, the anode electrode separator 14 and the cathode electrode separator 15 are formed of a porous body made of conductive metal, carbon, ceramics, or the like. The anode electrode separator 14 and the cathode electrode separator 15 have a plate shape.

When the unit cells SC described above are stacked, the unit cells SC are stacked in such a way that the anode electrode separator 14 of one of two adjacent unit cells SC is brought into contact with the cathode electrode separator 15 of the other unit cell.

The fuel cell 10 is provided with: a fuel gas flow path 17 that allows the above-described fuel gas to flow therethrough while facing the anode electrode 12 at least partially to supply the fuel gas to the anode electrode 12; an oxygen-containing gas flow path 18 that allows the above-described oxygen-containing gas to flow therethrough while facing the cathode electrode 13 at least partially to supply the oxygen-containing gas to the cathode electrode 13; and a cooling water flow path 19 that allows cooling water to flow therethrough.

Specifically, the multiple fuel gas flow paths 17 are formed in the anode electrode separator 14. Each fuel gas flow path 17 has a groove shape, for example, and is formed in a surface of the anode electrode separator 14 facing the anode electrode 12. Meanwhile, the multiple oxygen-containing gas flow paths 18 and the multiple cooling water flow paths 19 are formed in the cathode electrode separator 15.

Each oxygen-containing gas flow path 18 has a groove shape, for example, and is formed in a surface of the cathode electrode separator 15 facing the cathode electrode 13. Each cooling water flow path 19 has a groove shape, for example, and is formed in a surface of the cathode electrode separator 15 opposite to the surface in which the oxygen-containing gas flow path 18 is formed. The oxygen-containing gas flow path 18 and the cooling water flow path 19 are separated from each other in the thickness direction in the cathode electrode separator 15.

As previously described, in the fuel cell 10, the unit cells SC are stacked in such a way that the anode electrode separator 14 of one of two adjacent unit cells SC is brought into contact with the cathode electrode separator 15 of the other unit cell. In addition, the anode electrode separator 14 and the cathode electrode separator 15 are porous bodies having conductivity. Accordingly, in the fuel cell 10, the fuel gas flow path 17 and the cooling water flow path 19 are separated from each other by the porous body, and the oxygen-containing gas flow path 18 and the cooling water flow path 19 are separated from each other by the porous body.

Note that, the cooling water flow path 19 may be formed in the anode electrode separator 14 instead of in the cathode electrode separator 15. Further, a separator in which the cooling water flow path 19 is formed may be provided separately from the anode electrode separator 14 and the cathode electrode separator 15, and the separator may be provided between the anode electrode separator 14 and the cathode electrode separator 15, for example.

In Fig. 1, for convenience of description, the anode electrode 12 of one of adjacent unit cells SC in the fuel cell 10, the cathode electrode 13 of the other unit cell, and a separator portion 16 including the anode electrode separator 14 and the cathode electrode separator 15 between these electrodes are partially illustrated.

The hydrogen supply source 20 is a portion for storing a fuel gas containing hydrogen. The hydrogen supply source 20 is connected to an upstream end of the fuel gas flow path 17 via the upstream side hydrogen flow pipe 21. The downstream side hydrogen flow pipe 22 is connected to a downstream end of the fuel gas flow path 17. A fuel gas from the hydrogen supply source 20 flows into the fuel gas flow path 17 from the upstream end of the fuel gas flow path 17 via the upstream side hydrogen flow pipe 21, and is supplied to the anode electrode 12 through the fuel gas flow path 17. An unreacted fuel gas in the fuel gas flowing into the fuel gas flow path 17 flows into the downstream side hydrogen flow pipe 22 from the downstream end of the fuel gas flow path 17. In Fig. 1, the upstream side hydrogen flow pipe 21 and the downstream side hydrogen flow pipe 22 are illustrated so as to be connected to the anode electrode 12, but in practice, these pipes are connected to the fuel gas flow path 17 as described above.

In the upstream side hydrogen flow pipe 21, a hydrogen supply shutoff valve 23 and an anode inlet adjusting valve 24 are provided in this order in a direction from the upstream side to the downstream side. The hydrogen supply shutoff valve 23 switches between supply and stop of supply of a fuel gas to the fuel cell 10 by switching between opening and closing of the hydrogen supply shutoff valve. The anode inlet adjusting valve 24 adjusts the flow rate and the pressure of a fuel gas (hydrogen) supplied to the fuel cell 10 by adjusting the flow rate of the fuel gas flowing through the upstream side hydrogen flow pipe 21. The hydrogen supply shutoff valve 23 and the anode inlet adjusting valve 24 are electrically connected to the control device 80, and opening and closing of these valves or the openings of these valves are controlled by the control device 80.

In the downstream side hydrogen flow pipe 22, a hydrogen circulation pump 25 and a discharge shutoff valve 26 are provided in this order in a direction from the upstream side to the downstream side. The hydrogen circulation pump 25 generates a force for circulating a fuel gas. The discharge shutoff valve 26 switches between discharge and non-discharge of a fuel gas flowing out of the fuel cell 10 by switching between opening and closing of the discharge shutoff valve. When the discharge shutoff valve 26 is closed and the fuel cell 10 is in a state of not discharging a fuel gas, the fuel gas flowing out of the fuel cell 10 is returned to the upstream side hydrogen flow pipe 21 via a recycle flow path 29. The recycle flow path 29 is connected to the downstream side hydrogen flow pipe 22, in a portion between the hydrogen circulation pump 25 and the discharge shutoff valve 26, and the upstream side hydrogen flow pipe 21 in a portion downstream of the anode inlet adjusting valve 24.

In the present embodiment, a fuel gas flowing out from a downstream end of the downstream side hydrogen flow pipe 22 is discharged to the atmosphere. Specifically, the downstream end of the downstream side hydrogen flow pipe 22 is connected to the downstream side second oxygen flow pipe 33 to be described later as indicated by "*A" in Fig. 1. When the discharge shutoff valve 26 is opened to cause the fuel cell 10 to discharge a fuel gas, the fuel gas flowing out from the downstream end of the downstream side hydrogen flow pipe 22 flows out of the fuel cell 10, merges with an oxygen-containing gas flowing through the downstream side second oxygen flow pipe 33, and then is discharged.

The hydrogen circulation pump 25 and the discharge shutoff valve 26 are electrically connected to the control device 80. The number of revolutions of the hydrogen circulation pump 25 is controlled by the control device 80, and the opening/closing of the discharge shutoff valve 26 is controlled by the control device 80.

In addition, the upstream side hydrogen flow pipe 21 is provided with an anode inlet pressure sensor 27, and the downstream side hydrogen flow pipe 22 is provided with an anode outlet pressure sensor 28. The anode inlet pressure sensor 27 detects the pressure of a fuel gas flowing through the upstream side hydrogen flow pipe 21 in a portion downstream of the connection position of the recycle flow path 29. The anode outlet pressure sensor 28 detects the pressure of a fuel gas flowing through the downstream side hydrogen flow pipe 22 in a portion upstream of the hydrogen circulation pump 25. The anode inlet pressure sensor 27 and the anode outlet pressure sensor 28 are electrically connected to the control device 80 and provide detection results to the control device 80.

The oxygen supply source 30 is a place where an oxygen-containing gas containing oxygen exists, and is, for example, the atmosphere. The upstream side oxygen flow pipe 31 is connected to an upstream end of the oxygen-containing gas flow path 18, and the upstream side oxygen flow pipe 31 causes an oxygen-containing gas from the oxygen supply source 30 to flow into the oxygen-containing gas flow path 18. A downstream end of the oxygen-containing gas flow path 18 is connected to the cooling water tank 50 by a downstream side first oxygen flow pipe 32. An oxygen-containing gas from the oxygen supply source 30 flows into the oxygen-containing gas flow path 18 from the upstream end of the oxygen-containing gas flow path 18 through the upstream side oxygen flow pipe 31, and is supplied from the oxygen-containing gas flow path 18 to the cathode electrode 13. An unreacted oxygen-containing gas in the oxygen-containing gas flowing into the oxygen-containing gas flow path 18 flows into the downstream side first oxygen flow pipe 32 from the downstream end of the oxygen-containing gas flow path 18. In Fig. 1, the upstream side oxygen flow pipe 31 and the downstream side first oxygen flow pipe 32 are illustrated so as to be connected to the cathode electrode 13, but in practice, these pipes are connected to the oxygen-containing gas flow path 18 as described above.

Meanwhile, the downstream side second oxygen flow pipe 33 is connected to the cooling water tank 50, and the downstream side second oxygen flow pipe 33 discharges an oxygen-containing gas, having flowed into the cooling water tank 50 through the downstream side first oxygen flow pipe 32, from the cooling water tank 50. In the present embodiment, a lower end of the downstream side second oxygen flow pipe 33 is opened to the atmosphere. Therefore, the oxygen-containing gas flowing into the downstream side second oxygen flow pipe 33 from the cooling water tank 50 is discharged to the atmosphere.

In the upstream side oxygen flow pipe 31, a supply shutoff valve 34, a filter 35, and an intercooler 36 are provided in this order in a direction from the upstream side to the downstream side. The supply shutoff valve 34 switches between supply and stop of supply of an oxygen-containing gas to the fuel cell 10 by switching between opening and closing of the supply shutoff valve. The supply shutoff valve 34 is electrically connected to the control device 80, and opening and closing thereof is controlled by the control device 80.

The filter 35 removes foreign substances in an oxygen-containing gas taken in from the oxygen supply source 30. The intercooler 36 cools the oxygen-containing gas. Although details will be described later, in the present embodiment, a compressor 61 in the compressor unit 60 is disposed between the filter 35 in the upstream side oxygen flow pipe 31 and the intercooler 36. The compressor 61 compresses the oxygen-containing gas, and therefore can increase the temperature of the oxygen-containing gas. At this time, the intercooler 36 cools the oxygen-containing gas, so that the density of air in the oxygen-containing gas can be further increased.

The downstream side first oxygen flow pipe 32 has a downstream end connected to an upper surface of the cooling water tank 50. The connection position of the downstream side first oxygen flow pipe 32 to the cooling water tank 50 is not particularly limited, but is preferably a position on the upper side of the cooling water tank 50 where the downstream side first oxygen flow pipe 32 is opened in a gas phase portion in the cooling water tank 50.

The downstream side second oxygen flow pipe 33 has an upstream end connected to the upper surface of the cooling water tank 50. The connection position of the downstream side second oxygen flow pipe 33 to the cooling water tank 50 is not particularly limited, but is preferably a position on the upper side of the cooling water tank 50 where the downstream side second oxygen flow pipe 33 is opened to the gas phase portion in the cooling water tank 50.

In the downstream side second oxygen flow pipe 33, a gas-liquid separator 40 and a discharge shutoff valve 45 are provided in this order in a direction from the upstream side to the downstream side. The gas-liquid separator 40 separates moisture contained in an oxygen-containing gas discharged from the cooling water tank 50 from a gas component of the oxygen-containing gas. Although details will be described later, a turbine 62 in the compressor unit 60 is disposed in the downstream side second oxygen flow pipe 33, and the gas-liquid separator 40 is provided in a portion of the downstream side second oxygen flow pipe 33 upstream of the arrangement position of the turbine 62. As a result, a situation in which moisture flows into the turbine 62 and affects the rotation of the turbine 62 can be suppressed.

The gas-liquid separator 40 includes, for example, a cooling water storing unit 41 and a cooling medium pipe 42 disposed in the cooling water storing unit 41. The cooling water storing unit 41 constitutes a part of the flow path of the downstream side second oxygen flow pipe 33. The cooling medium pipe 42 circulates a cooling medium to cool an oxygen-containing gas flowing into the cooling water storing unit 41, thereby condensing moisture contained in the oxygen-containing gas.

Moisture separated by the gas-liquid separator 40 mainly contains cooling water to be supplied to the fuel cell 10. The moisture separated by the gas-liquid separator 40 is then returned to the cooling water tank 50. This can suppress discharge of cooling water and effectively use the cooling water. The gas-liquid separator 40 and the cooling water tank 50 are connected by a return pipe 43. The return pipe 43 is provided with a drain trap 44. The drain trap 44 allows a flow of moisture from the gas-liquid separator 40 to the cooling water tank 50 and blocks a flow of gas and liquid in the reverse direction.

The discharge shutoff valve 45 switches between discharge and non-discharge of an oxygen-containing gas flowing out of the fuel cell 10 by switching between opening and closing of the discharge shutoff valve. The discharge shutoff valve 45 is electrically connected to the control device 80, and opening and closing thereof is controlled by the control device 80. When the discharge shutoff valve 45 is opened to discharge the oxygen-containing gas flowing out of the fuel cell 10, the oxygen-containing gas is discharged from a downstream end of the downstream side second oxygen flow pipe 33 through the discharge shutoff valve 45 by way of the turbine 62. Here, in the present embodiment, as indicated by "*A" in Fig. 1, the downstream end of the downstream side hydrogen flow pipe 22 is connected to a portion of the downstream side second oxygen flow pipe 33 downstream of the arrangement position of the turbine 62. Therefore, the oxygen-containing gas flowing through the discharge shutoff valve 45 by way of the turbine 62 merges with a fuel gas flowing out from the downstream end of the downstream side hydrogen flow pipe 22 on the downstream side of the turbine 62 and is discharged.

Meanwhile, in the present embodiment, the upstream side oxygen flow pipe 31 and the downstream side second oxygen flow pipe 33 are connected by an oxygen-containing gas bypass pipe 47. The oxygen-containing gas bypass pipe 47 allows an oxygen-containing gas to flow from the upstream side oxygen flow pipe 31 and flow into the downstream side second oxygen flow pipe 33. The oxygen-containing gas bypass pipe 47 is provided with a bypass adjusting valve 48 that adjusts the flow rate of the oxygen-containing gas flowing through the oxygen-containing gas bypass pipe 47 toward the downstream side second oxygen flow pipe 33.

In the present embodiment, the oxygen-containing gas bypass pipe 47 connects a portion of the upstream side oxygen flow pipe 31 downstream of the compressor 61 and a portion of the downstream side second oxygen flow pipe 33 upstream of the turbine 62. Specifically, the oxygen-containing gas bypass pipe 47 connects a portion of the upstream side oxygen flow pipe 31 downstream of the intercooler 36 and a portion of the downstream side second oxygen flow pipe 33 between the gas-liquid separator 40 and the turbine 62. However, the connection position of the oxygen-containing gas bypass pipe 47 may be different from that in Fig. 1.

The bypass adjusting valve 48 is electrically connected to the control device 80, and the opening thereof is controlled by the control device 80. The bypass adjusting valve 48 is controlled to the open state when it is desired to reduce the amount of supply of an oxygen-containing gas mainly to the fuel cell 10.

In addition, the upstream side oxygen flow pipe 31 is provided with an oxygen inlet pressure sensor 37, and the downstream side second oxygen flow pipe 33 is provided with an oxygen outlet pressure sensor 46. The oxygen inlet pressure sensor 37 detects the pressure of an oxygen-containing gas flowing through a portion of the upstream side oxygen flow pipe 31 downstream of the compressor 61, more specifically, a portion thereof downstream of the intercooler 36 and downstream of the connection position of the oxygen-containing gas bypass pipe 47. The oxygen outlet pressure sensor 46 detects the pressure of an oxygen-containing gas flowing through a portion of the downstream side second oxygen flow pipe 33 upstream of the turbine 62, more specifically, a portion of the downstream side second oxygen flow pipe 33 between the gas-liquid separator 40 and the turbine 62 and downstream of the connection position of the oxygen-containing gas bypass pipe 47. The oxygen inlet pressure sensor 37 and the oxygen outlet pressure sensor 46 are electrically connected to the control device 80 and provide detection results to the control device 80.

The cooling water tank 50 is a container that stores cooling water, and an upstream side cooling water flow pipe 51 and a downstream side cooling water flow pipe 52 are connected to the cooling water tank 50. The upstream side cooling water flow pipe 51 connects an upstream end of the cooling water flow path 19 and the cooling water tank 50, and allows cooling water to flow from the cooling water tank 50 into the cooling water flow path 19. The downstream side cooling water flow pipe 52 connects a downstream end of the cooling water flow path 19 and the cooling water tank 50, and returns cooling water flowing out of the cooling water flow path 19 to the cooling water tank 50. The cooling water may be water.

The upstream side cooling water flow pipe 51 is connected to a bottom surface of the cooling water tank 50. The connection position of the upstream side cooling water flow pipe 51 to the cooling water tank 50 is not particularly limited, but is preferably a position on the bottom side where the upstream side cooling water flow pipe 51 is opened to a liquid phase portion (in the cooling water) in the cooling water tank 50.

In the downstream side cooling water flow pipe 52, a cooling water pump 53, a cooling water cooling heat exchanger 54, and a water treatment device 55 are provided in this order in a direction from the upstream side to the downstream side. The cooling water pump 53 generates a force for circulating cooling water. The cooling water pump 53 is electrically connected to the control device 80, and the number of revolutions thereof is controlled by the control device 80.

In addition, the cooling water pump 53 may be provided in the upstream side cooling water flow pipe 51. However, it is assumed in the present embodiment to form a state in which the pressure of cooling water in the fuel cell 10 is lower than the pressure of a fuel gas and an oxygen-containing gas, and it is difficult to form this state when the cooling water pump 53 is provided in the upstream side cooling water flow pipe 51. Therefore, the cooling water pump 53 is preferably provided in the downstream side cooling water flow pipe 52.

Since cooling water discharged from the fuel cell 10 absorbs heat from the fuel cell 10, the cooling water cooling heat exchanger 54 cools the cooling water with a cooling medium. The water treatment device 55 removes impurities in the cooling water. The water treatment device 55 removes impurities in the cooling water, thereby suppressing deterioration of the fuel cell 10.

In addition, the cooling water tank 50 is provided with: a cooling water tank pressure sensor 56A; a water level sensor 56B; a drain pipe 57; and a drain on-off valve 58. The cooling water tank pressure sensor 56A detects the pressure of the gas phase portion in the cooling water tank 50. The cooling water tank pressure sensor 56A is electrically connected to the control device 80 and provides a detection result to the control device 80.

The water level sensor 56B detects the water level of cooling water in the cooling water tank 50. The drain pipe 57 is connected to a bottom of the cooling water tank 50, and is provided for discharging cooling water in the cooling water tank 50. The drain on-off valve 58 is provided in the drain pipe 57, and switches between discharge and non-discharge of cooling water in the drain pipe 57.

In the present embodiment, the water level sensor 56B, the drain pipe 57, and the drain on-off valve 58 constitute a water level maintaining mechanism 59. The water level maintaining mechanism 59 controls opening and closing of the drain on-off valve 58, based on the detection result of the water level sensor 56B, so that the water surface of cooling water stored in the cooling water tank 50 is maintained at a predetermined height. Specifically, the water level sensor 56B is electrically connected to the control device 80 and provides a detection result to the control device 80. The drain on-off valve 58 is electrically connected to the control device 80, and controls the drain on-off valve 58 based on the detection result of the water level sensor 56B. Note that, the water level maintaining mechanism 59 may include a cooling water filling portion, and may fill cooling water based on the detection result of the water level sensor 56B.

In the present embodiment, as described above, an oxygen-containing gas from the oxygen supply source 30 is compressed and supplied to the fuel cell 10, flows out of the fuel cell 10, and then is discharged via the cooling water tank 50. The compressor unit 60 includes: a compressor 61; a turbine 62; a drive shaft 63 that connects the compressor 61 and the turbine 62; and a motor 64 that drives a drive shaft 63. The compressor 61 is disposed inside the upstream side oxygen flow pipe 31, and compresses and sends an oxygen-containing gas to the downstream side. The turbine 62 is disposed inside the downstream side second oxygen flow pipe 33, and is rotated by the oxygen-containing gas (its pressure) discharged from the cooling water tank 50.

Specifically, the compressor 61 is disposed between the filter 35 and the intercooler 36 in the upstream side oxygen flow pipe 31 as described above. The turbine 62 is provided in a portion of the downstream side second oxygen flow pipe 33 on the upstream side of the gas-liquid separator 40. More specifically, the turbine 62 is provided in a portion of the downstream side second oxygen flow pipe 33 downstream of the connection position of the oxygen-containing gas bypass pipe 47.

The motor 64 is electrically connected to the control device 80, and the number of revolutions thereof is controlled by the control device 80. The flow rate of an oxygen-containing gas supplied from the compressor 61 to the downstream side increases or decreases according to an increase or decrease in the number of revolutions of the motor 64. The turbine 62 is rotated by the exhaust pressure of an oxygen-containing gas discharged from the fuel cell 10 to assist the power of the motor 64. Thus, in the compressor unit 60, the compressor 61 can be efficiently rotated.

As indicated by a reference sign "*C11 to *C13, *C21 to *C23" in Fig. 1, the radiator 70 is connected to the intercooler 36, the gas-liquid separator 40, and the cooling water cooling heat exchanger 54. The radiator 70 cools a cooling medium, and the cooled cooling medium branches into three flow paths by driving of a cooling medium pump 71 and passes through the intercooler 36, the gas-liquid separator 40, and the cooling water cooling heat exchanger 54. Note that, the three radiators 70 may be provided and each connected to the intercooler 36, the gas-liquid separator 40, and the cooling water cooling heat exchanger 54.

The control device 80 controls the pressure, flow rate, and the like of a fluid (a fuel gas, an oxygen-containing gas, and cooling water) flowing in the fuel cell system S1 as previously described. The control device 80 can adjust the flow rate and/or the pressure of an oxygen-containing gas flowing through the fuel gas flow path 17 by controlling the number of rotations of the compressor 61 and/or the opening of the bypass adjusting valve 48 based on, for example, a detection result of at least one of the oxygen inlet pressure sensor 37, the oxygen outlet pressure sensor 46, and the cooling water tank pressure sensor 56A.

The control device 80 can adjust the flow rate and/or the pressure of a fuel gas flowing through the oxygen-containing gas flow path 18 by controlling the opening of the hydrogen circulation pump 25 and/or the anode inlet adjusting valve 24 based on, for example, a detection result of the anode inlet pressure sensor 27 and/or the anode outlet pressure sensor 28.

More specifically, the control device 80 in the present embodiment controls at least one of the flow rate of a fuel gas flowing through the fuel gas flow path 17, the number of revolutions of the compressor 61, and the opening of the bypass adjusting valve 48 so that the pressure difference between the internal pressure of the fuel gas flow path 17 and the internal pressure of the oxygen-containing gas flow path 18 becomes a predetermined pressure value or less. When this control is performed, in the present embodiment, the pressure detected by the anode outlet pressure sensor 28 is treated as the internal pressure of the fuel gas flow path 17, and the pressure detected by the cooling water tank pressure sensor 56A is treated as the internal pressure of the oxygen-containing gas flow path 18. However, the internal pressure of the fuel gas flow path 17 and the internal pressure of the oxygen-containing gas flow path 18 may be specified by detection results of other sensors.

In addition, in the present embodiment, the control device 80 opens the bypass adjusting valve 48 when the flow rate of a fuel gas supplied to the fuel gas flow path 17 is changed to be decreased by a predetermined value or more. The state in which the flow rate of the fuel gas is changed to be decreased by the predetermined value or more is, for example, a state in which the supply of the fuel gas is stopped or greatly reduced at the time of abnormality. In this case, the fuel cell 10 may deteriorate quickly unless the amount of oxygen supplied to the fuel cell 10 is significantly reduced accordingly. However, even if the number of revolutions of the motor 64 is lowered, the number of revolutions of the motor 64 may not be rapidly lowered due to the inertial force. Therefore, in the present embodiment, when the flow rate of the fuel gas is changed to be decreased by the predetermined value or more, the bypass adjusting valve 48 is largely opened at a predetermined opening or more. Such control can suppress pressure fluctuation in the oxygen flow paths (31-33) due to a change in the flow rate of an oxygen-containing gas to be supplied to the fuel cell 10, so that a load on the compressor unit 60 can also be reduced.

The control device 80 also controls the drain on-off valve 58, the supply shutoff valves 23 and 34, the discharge shutoff valve 45, and the like. The control device 80 may be configured by a computer including a CPU, a ROM, and the like. Further, the control device 80 may include another processor, electric circuit, or the like.

In the fuel cell system S1 according to the present embodiment, as described above, high-pressure oxygen can be supplied to the fuel cell 10 by the compressor unit 60 in which the compressor 61 and the turbine 62 are interlocked. Here, in the fuel cell 10, a state is formed in which the pressure of an oxygen-containing gas flowing through the oxygen-containing gas flow path 18 is larger than the pressure of cooling water flowing through the cooling water flow path 19 and the pressure difference between the pressure of the oxygen-containing gas and the pressure of the cooling water in the fuel cell 10 is smaller than the capillary force of cooling water having permeated the cathode electrode separator 15 as the porous body, thus forming a sealed state. This sealed state means a state in which the cooling water is inhibited from flowing into the oxygen-containing gas flow path 18 and the oxygen-containing gas is inhibited from flowing into the cooling water flow path 19.

In the present embodiment, the compressor 61 and the turbine 62 are interlocked, and an oxygen-containing gas is efficiently compressed by the compressor 61. Therefore, when the above sealed state is formed, a state in which the pressure of an oxygen-containing gas flowing through the oxygen-containing gas flow path 18 is larger than the pressure of cooling water flowing through the cooling water flow path 19 can be easily formed.

In addition, although the pressure of an oxygen-containing gas flowing through the oxygen-containing gas flow path 18 can increase, in the present embodiment, the oxygen-containing gas flowing out from the oxygen-containing gas flow path 18 flows into the cooling water tank 50 and then is discharged. In this case, when the cooling water pump 53 is driven, the pressure in the cooling water tank 50 is not significantly lowered relative to the pressure of the oxygen-containing gas at the downstream end of the oxygen-containing gas flow path 18, and the pressure of cooling water at the upstream end of the cooling water flow path 19 is not significantly lowered relative to the pressure in the cooling water tank 50. Accordingly, the pressure of the cooling water flowing through the cooling water flow path 19 is not significantly reduced relative to the pressure of the oxygen-containing gas flowing through the oxygen-containing gas flow path 18. Therefore, the pressure difference between the pressure of the oxygen-containing gas and the pressure of the cooling water in the fuel cell 10 can also be easily and efficiently controlled within a desired range. In other words, even if the output of the cooling water pump 53 is not increased or even if the amount of increase in the output of the cooling water pump 53 is suppressed, for example, a desired pressure difference between the oxygen-containing gas and the cooling water can be obtained by a simple mechanical configuration in which the oxygen-containing gas discharged from the fuel cell 10 is discharged via the cooling water tank 50, so that the sealed state can be easily and efficiently formed. This makes it possible to easily and efficiently suppress the influence of the oxygen-containing gas on other fluids (cooling water) flowing through the fuel cell 10, and to easily and efficiently perform an operation with an appropriate high power generation output.

Meanwhile, in order to form the sealed state between the fuel gas and the cooling water, in the fuel cell 10 in the present embodiment, a state is formed in which the pressure of the fuel gas flowing through the fuel gas flow path 17 is larger than the pressure of the cooling water flowing through the cooling water flow path 19, and the pressure difference between the pressure of the fuel gas and the pressure of the cooling water in the fuel cell 10 is smaller than the capillary force of the cooling water having penetrated the cathode electrode separator 15 as the porous body. On the other hand, in the present embodiment, at least one of the flow rate of the fuel gas flowing through the fuel gas flow path 17, the number of revolutions of the compressor 61, and the opening of the bypass adjusting valve 48 is controlled so that the pressure difference between the internal pressure of the fuel gas flow path 17 and the internal pressure of the oxygen-containing gas flow path 18 becomes the predetermined pressure value or less.

Fig. 3 is a flowchart illustrating an example of an operation of the fuel cell system S1 according to the present embodiment. Specifically, Fig. 3 shows an operation for controlling the pressure difference between the internal pressure of the above-described fuel gas flow path 17 and the internal pressure of the oxygen-containing gas flow path 18 to the predetermined pressure value or less. The operation illustrated in Fig. 3 is performed when the operation with a predetermined power generation output is started, or when, for example, the setting of the power generation output is changed during normal operation (power generation).

In Fig. 3, first, Step S31 shows a process of performing at least one of the flow rate control of a fuel gas by adjusting the opening of the anode inlet adjusting valve 24 on the upstream side hydrogen flow pipe 21, and the flow rate or pressure control of an oxygen-containing gas supplied to the fuel cell 10 by adjusting the output (number of revolutions) of the compressor 61 and the opening of the bypass adjusting valve 48 on the oxygen-containing gas bypass pipe 47 so that the pressure difference between the internal pressure of the fuel gas flow path 17 and the internal pressure of the oxygen-containing gas flow path 18 becomes the predetermined pressure value or less. Immediately after the start of the operation illustrated in Fig. 3, the opening of the anode inlet adjusting valve 24, the output of the compressor 61, and the like are controlled so that the fuel gas and the oxygen-containing gas corresponding to the set power generation output are supplied to the fuel cell 10, and thereafter, feedback control is performed through Steps S31 and 32 in the subsequent stage.

In Step S32 after the processing is performed in Step S31, the pressure detected by the cooling water tank pressure sensor 56A and the anode outlet pressure sensor 28 are detected. In the present embodiment, the pressure detected by the anode outlet pressure sensor 28 is treated as the internal pressure of the fuel gas flow path 17, and the pressure detected by the cooling water tank pressure sensor 56A is treated as the internal pressure of the oxygen-containing gas flow path 18.

Next, in Step S33, the difference between the pressure detected by the cooling water tank pressure sensor 56A and the anode outlet pressure sensor 28 is calculated as the pressure difference between the internal pressure of the fuel gas flow path 17 and the internal pressure of the oxygen-containing gas flow path 18. Then, when the calculated pressure difference is within a threshold, the process ends (END). On the other hand, when the calculated pressure difference is not within the threshold, the process of Step S31 is performed.

In the fuel cell system S1 according to the present embodiment having been described above, high-pressure oxygen can be supplied to the fuel cell 10 by the compressor unit 60 in which the compressor 61 and the turbine 62 are interlocked. On the other hand, an oxygen-containing gas flowing out from the oxygen-containing gas flow path 18 flows into the cooling water tank 50 and then is discharged. In this case, when the cooling water pump 53 is driven, the pressure of the cooling water flowing through the cooling water flow path 19 is not significantly reduced relative to the pressure of the oxygen-containing gas flowing through the oxygen-containing gas flow path 18. Therefore, the pressure difference between the pressure of the oxygen-containing gas and the pressure of the cooling water in the fuel cell 10 can be easily and efficiently controlled within a desired range.

In other words, even if the output of the cooling water pump 53 is not increased or even if the amount of increase in the output of the cooling water pump 53 is suppressed, for example, a desired pressure difference between the oxygen-containing gas and the cooling water can be obtained by a simple mechanical configuration in which the oxygen-containing gas discharged from the fuel cell 10 is discharged via the cooling water tank 50, so that the sealed state can be easily and efficiently formed. This makes it possible to easily and efficiently suppress the influence of the oxygen-containing gas on other fluids (cooling water) flowing through the fuel cell 10.

Thus, according to the present embodiment, it is possible to easily and efficiently suppress the influence of the high-pressure oxygen-containing gas supplied to the fuel cell 10 on other fluids (cooling water in the present embodiment), and to easily and efficiently perform an operation with an appropriate high power generation output.

The fuel cell system S1 further includes a water level maintaining mechanism 59 that maintains the water surface of cooling water stored in the cooling water tank 50 at a predetermined height. This makes it possible to inhibit an undesired large amount of cooling water from being discharged along with the discharge of the oxygen-containing gas, and to avoid a situation in which the pressure of the cooling water becomes excessively low relative to the oxygen-containing gas along with a decrease in the amount of supply of the cooling water, so that an appropriate operation state and a cooling state can be maintained.

The fuel cell system S1 further includes: the oxygen-containing gas bypass pipe 47 that connects the upstream side oxygen flow pipe 31 and the downstream side second oxygen flow pipe 33; and the bypass adjusting valve 48 that adjusts the flow rate of the oxygen-containing gas flowing through the oxygen-containing gas bypass pipe 47. This makes it possible to flexibly adjust the flow rate or the pressure of the oxygen-containing gas supplied to the fuel cell 10.

In addition, the fuel cell system S1 controls at least one of the flow rate of the fuel gas flowing through the fuel gas flow path 17, the number of revolutions of the compressor 61, and the opening of the bypass adjusting valve 48 so that the pressure difference between the internal pressure of the fuel gas flow path 17 and the internal pressure of the oxygen-containing gas flow path 18 becomes the predetermined pressure value or less. As a result, an appropriate operation state is maintained.

Further, the fuel cell system S1 opens the bypass adjusting valve 48 when the flow rate of the fuel gas supplied to the fuel gas flow path 17 is changed to be decreased by the predetermined value or more. As a result, it is possible to avoid at an early stage a situation in which the fuel cell 10 deteriorates quickly due to an increase in the flow rate of oxygen relative to the flow rate of the fuel gas.

### <Second Embodiment>

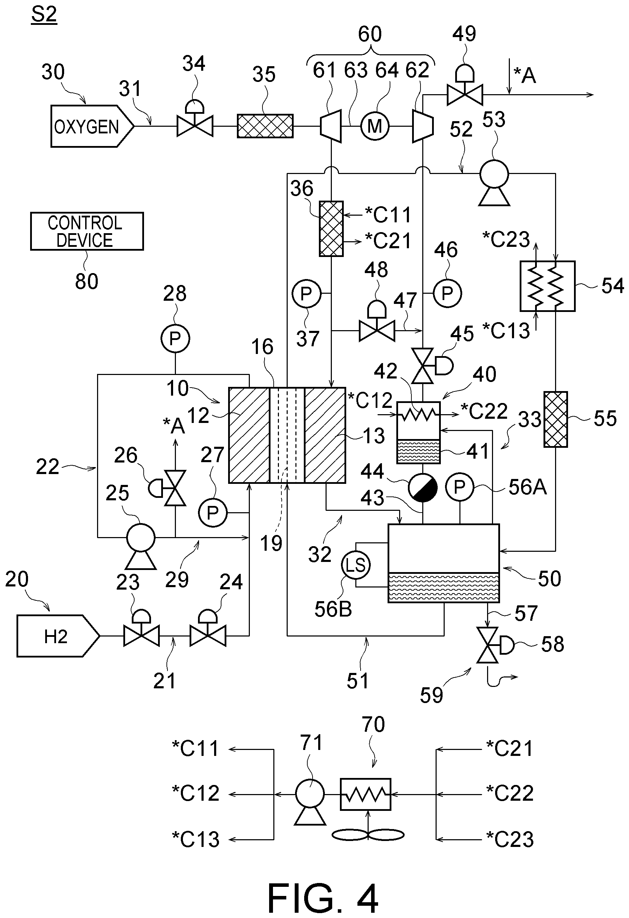

Next, a fuel cell system S2 according to a second embodiment will be described with reference to Fig. 4. The same reference signs are given to the same parts as those in the first embodiment among the components in the present embodiment, and redundant description thereof will be omitted.

As illustrated in Fig. 4, the fuel cell system S2 according to the present embodiment further includes an exhaust adjusting valve 49 that adjusts the flow rate of an oxygen-containing gas flowing out from the turbine 62 in a portion of the downstream side second oxygen flow pipe 33 downstream of the turbine 62. The exhaust adjusting valve 49 is electrically connected to the control device 80, and the opening thereof is controlled by the control device 80.

The opening of the exhaust adjusting valve 49 increases when the bypass adjusting valve 48 is opened. As a result, an oxygen-containing gas flowing into the downstream side second oxygen flow pipe 33 through the bypass adjusting valve 48 can be smoothly circulated. Note that, as described in the first embodiment, the bypass adjusting valve 48 is opened, for example, when the flow rate of a fuel gas supplied to the fuel gas flow path 17 is changed to be decreased by a predetermined value or more.

Further, the exhaust adjusting valve 49 may change the opening of the exhaust adjusting valve 49 according to a change in the flow rate of a fuel gas supplied to the fuel gas flow path 17 in a state where the bypass adjusting valve 48 is closed. Specifically, the exhaust adjusting valve 49 may increase the opening thereof when the flow rate of the fuel gas supplied to the fuel gas flow path 17 is increased, and may decrease the opening thereof when the flow rate of the fuel gas supplied to the fuel gas flow path 17 is decreased.

According to the second embodiment, the same effects as those of the first embodiment can be obtained. Further, variations in fluid control can be increased by the exhaust adjusting valve 49.

According to the embodiments having been described, it is possible to easily and efficiently suppress the influence of the high-pressure oxygen-containing gas supplied to the fuel cell on other fluids, and to easily and efficiently perform an operation with an appropriate high power generation output.

Although the embodiments have been described above, the above embodiments have been presented as examples, and are not intended to limit the scope of the invention. Such novel embodiments can be implemented in various other forms, and various omissions, substitutions, and changes can be made without departing from the gist of the invention. Other modifications are included in the scope and gist of the invention, and are included in the invention described in the claims and the equivalent scope thereof.

## Claims

1. A fuel cell system comprising:
a fuel cell that is provided with a fuel gas flow path through which a fuel gas to be supplied to an anode electrode flows, an oxygen-containing gas flow path through which an oxygen-containing gas containing oxygen to be supplied to a cathode electrode flows, and a cooling water flow path through which cooling water flows, and in which at least the oxygen-containing gas flow path and the cooling water flow path are separated from each other by a conductive porous body;
a cooling water tank that stores the cooling water;
an upstream side cooling water flow pipe that connects an upstream end of the cooling water flow path and the cooling water tank and allows the cooling water to flow from the cooling water tank into the cooling water flow path;
a downstream side cooling water flow pipe that connects a downstream end of the cooling water flow path and the cooling water tank and returns the cooling water that has flowed out of the cooling water flow path to the cooling water tank;
an upstream side oxygen flow pipe that is connected to an upstream end of the oxygen-containing gas flow path and allows the oxygen-containing gas to flow into the oxygen-containing gas flow path;
a downstream side first oxygen flow pipe that connects a downstream end of the oxygen-containing gas flow path and the cooling water tank;
a downstream side second oxygen flow pipe that is connected to the cooling water tank and discharges the oxygen-containing gas that has flowed into the cooling water tank from the downstream side first oxygen flow pipe out of the cooling water tank; and
a compressor unit that includes a compressor which is disposed inside the upstream side oxygen flow pipe and compresses and sends the oxygen-containing gas to a downstream side, a turbine which is disposed inside the downstream side second oxygen flow pipe and rotated by the oxygen-containing gas discharged from the cooling water tank, and a drive shaft which connects the compressor and the turbine, and drives the drive shaft by a motor.

2. The fuel cell system according to claim 1, further comprising a water level maintaining mechanism that maintains a water surface of the cooling water stored in the cooling water tank at a predetermined height.

3. The fuel cell system according to claim 1, further comprising:
an oxygen-containing gas bypass pipe that connects the upstream side oxygen flow pipe and the downstream side second oxygen flow pipe; and
a bypass adjusting valve that adjusts a flow rate of the oxygen-containing gas flowing through the oxygen-containing gas bypass pipe toward the downstream side second oxygen flow pipe.

4. The fuel cell system according to claim 3, wherein at least one of a flow rate of the fuel gas flowing through the fuel gas flow path, the number of revolutions of the compressor, and an opening of the bypass adjusting valve is controlled so that a pressure difference between an internal pressure of the fuel gas flow path and an internal pressure of the oxygen-containing gas flow path becomes a predetermined pressure value or less.

5. The fuel cell system according to claim 3, wherein the bypass adjusting valve is opened when a flow rate of the fuel gas supplied to the fuel gas flow path is changed to be decreased by a predetermined value or more.

6. The fuel cell system according to claim 5, further comprising
an exhaust adjusting valve that adjusts a flow rate of the oxygen-containing gas flowing out of the turbine in a portion of the downstream side second oxygen flow pipe that is downstream of the turbine,
wherein the exhaust adjusting valve increases an opening thereof when the bypass adjusting valve is opened.

7. The fuel cell system according to claim 1, further comprising
an exhaust adjusting valve that adjusts a flow rate of the oxygen-containing gas flowing out of the turbine in a portion of the downstream side second oxygen flow pipe that is downstream of the turbine,
wherein an opening of the exhaust adjusting valve is changed according to a change in a flow rate of the fuel gas supplied to the fuel gas flow path.

8. The fuel cell system according to claim 7, wherein the exhaust adjusting valve increases an opening thereof when the flow rate of the fuel gas is increased, and decreases the opening thereof when the flow rate of the fuel gas is decreased.

9. The fuel cell system according to claim 1, further comprising a gas-liquid separator that separates moisture contained in the oxygen-containing gas discharged from the cooling water tank, in a portion of the downstream side second oxygen flow pipe that is upstream of the turbine.

10. A method of operating a fuel cell system including:
a fuel cell that is provided with a fuel gas flow path through which a fuel gas to be supplied to an anode electrode flows, an oxygen-containing gas flow path through which an oxygen-containing gas containing oxygen to be supplied to a cathode electrode flows, and a cooling water flow path through which cooling water flows, and in which at least the oxygen-containing gas flow path and the cooling water flow path are separated from each other by a conductive porous body;
a cooling water tank that stores the cooling water;
an upstream side cooling water flow pipe that connects an upstream end of the cooling water flow path and the cooling water tank and allows the cooling water to flow from the cooling water tank into the cooling water flow path;
a downstream side cooling water flow pipe that connects a downstream end of the cooling water flow path and the cooling water tank and returns the cooling water that has flowed out of the cooling water flow path to the cooling water tank;
an upstream side oxygen flow pipe that is connected to an upstream end of the oxygen-containing gas flow path and allows the oxygen-containing gas to flow into the oxygen-containing gas flow path;
a downstream side first oxygen flow pipe that connects a downstream end of the oxygen-containing gas flow path and the cooling water tank;
a downstream side second oxygen flow pipe that is connected to the cooling water tank and discharges the oxygen-containing gas that has flowed into the cooling water tank from the downstream side first oxygen flow pipe out of the cooling water tank; and
a compressor unit that includes a compressor which is disposed inside the upstream side oxygen flow pipe and compresses and sends the oxygen-containing gas to a downstream side, a turbine which is disposed inside the downstream side second oxygen flow pipe and rotated by the oxygen-containing gas discharged from the cooling water tank, and a drive shaft which connects the compressor and the turbine, and drives the drive shaft by a motor, the method comprising
performing an operation so that a pressure difference between an internal pressure of the fuel gas flow path and an internal pressure of the oxygen-containing gas flow path becomes a predetermined pressure value or less.
